# EUROPEAN PATENT APPLICATION

(11) **EP 4 761 266 A1**
(43) Date of publication of application: **17.06.2026**
(21) Application number: 25211260.2
(22) Date of filing: 27.10.2025
(51) Int. Cl.: H04N 23/90, H04N 23/61, H04N 23/62, H04N 23/63, H04N 23/66, H04N 23/695, H04N 7/18, G08B 13/196

(54) **CONTROL APPARATUS, CONTROL METHOD, AND STORAGE MEDIUM**

(30) Priority: 10.12.2024 JP 2024215315
(71) Applicant: Canon Kabushiki Kaisha, Tokyo, 146-8501 (JP)
(72) Inventor: YAMAMOTO, Yuki, Tokyo, 146-8501 (JP)
(74) Representative: TBK

(57) **Abstract**

A control apparatus (200) for controlling a plurality of image capturing apparatus (100) includes captured image acquisition means (201) for acquiring captured images from the plurality of image capturing apparatuses; subject position acquisition means (201) for acquiring positional relationships for a plurality of subjects from the captured images acquired by the captured image acquisition means; allocation means (201) for allocating identification codes that are conferred in order to select the plurality of image capturing apparatuses such that an order of the image capturing apparatuses becomes the same order as the order in which the plurality of subjects are lined up based on the positional relationships acquired by the subject position acquisition means and the captured images; and selection means (201) for selecting one of the plurality of image capturing apparatuses based on the identification codes allocated by the allocation means.

## Description

### TECHNICAL FIELD

The present disclosure relates to a control apparatus that controls an image capturing apparatus, a method, and a storage medium.

### BACKGROUND

In recent years, the proliferation of network cameras that are able to perform control, and streaming of video image via a network has increased. Due to this technology, it has become possible for a user to operate a camera controller and remotely control various functions that are necessary for use of the camera via a network such as controlling the zoom, focus, and the like, performing image quality settings, controlling the power source, managing the state of the camera, performing network settings, and the like.

Furthermore, along with the proliferation of such network cameras, an IP remote image capturing technology has been proposed that controls a plurality of network cameras at the same time from a remote location and captures video images from a variety of angles of view.

However, there are limitations to the number of joysticks, dials, and buttons that a camera controller can have, and therefore, generally, a camera controller operates each camera one by one. In this case, cameras that are operation targets are registered in advance in the camera controller by being linked with camera numbers, and the camera that will be the operation target is selected based on these camera numbers. Therefore, in a case in which there are a plurality of cameras connected to a camera controller it is necessary to switch the operation target camera by selecting this camera each time, and to perform a desired operation to each camera while confirming the video image for the selected camera.

As a result thereof, during IP remote image capturing using a camera controller, the user is only able to confirm the camera video image for the operation target, and therefore, it becomes difficult to understand the situation for the entire image capturing location, and the problem occurs that it is difficult to switch to a camera that is image capturing a desired angle of view.

As the conventional method for solving such a problem, there is a method of connecting the camera controller to a bird's-eye view camera, understanding the situation for the entire image capturing location while constantly confirming the video image from the bird's-eye view camera and the video images from other cameras, and switching to the camera that is image capturing the desire angle of view. However, in this method, it is necessary for the user to switch the operation target cameras to the bird's-eye view camera one by one in order to confirm the state, and there is the residual problem that it is difficult to directly switch to the camera that is image capturing the desired angle of view.

Therefore, during IP remote image capturing using a camera controller, it is desirable to be able to rapidly and directly switch to a camera that is image capturing a desired angle of view while confirming the state of the entire image capturing location.

Japanese Patent Laid-Open No. 2000-201345 discloses that in a video image selecting apparatus, a subject position is displayed on a video image output apparatus, and the user selects a desired video image by selecting the subject position that has been displayed using a subject position input apparatus.

### SUMMARY

In Japanese Patent Laid-Open No. 2000-201345, a camera that is capturing a desired video image is selected by selecting a subject position that has been displayed. Therefore, in Japanese Patent Laid-Open No. 2000-201345, a subject position display apparatus such as a display apparatus, and the like becomes necessary. However, in the above-described camera controller, the cameras are switched by operating buttons to which numerical characters such as camera numbers, and the like have been attached. In a case in which the camera is switched by such a button operation, this is difficult to apply to a method in which the subject position is selected on a screen, such as in Japanese Patent Laid-Open No. 2000-201345. In addition, in a case in which the same subject is being image captured by a plurality of cameras, the subject position is the same, and therefore, in Japanese Patent Laid-Open No. 2000-201345, the subject position (push button) that is displayed on the subject position display apparatus becomes one position. Therefore, for example, in a case in which there is a camera that is image capturing only the upper half of a subject's body, and a camera that is capturing images of the entire body of the same subject, it is not possible to differentiate and switch between these.

The present disclosure is directed to easily select a desired video image.

The present disclosure in its first aspect provides a control apparatus as specified in claim 1. Optional features are specified in claims 2 to 11.

The present disclosure in its second aspect provides a control method as specified in claim 12.

The present disclosure in its third aspect provides a storage medium as specified in claim 13.

According to the present embodiment, identification codes are allocated such that the order of the identification codes becomes the same order as the order in which the plurality of subjects are lined up based on a captured image and the positional relationships of the subjects, and therefore, it is possible to easily select a desired video image.

Features of the present disclosure will become apparent from the following description of embodiments with reference to the attached drawings. The following description of embodiments is described by way of example.

### BRIEF DESCRIPTION OF THE DRAWINGS

FIG. 1 is a diagram showing a configurational example of a system including a control apparatus according to the First Embodiment.
FIG. 2 is a block diagram of a camera and a controller that were shown in FIG. 1.
FIG. 3 is a diagram showing an example of connected camera information.
FIG. 4 is a perspective view diagram showing an example of a housing of the controller that has been shown in FIG. 1.
FIG. 5 is a flowchart showing control processing for the controller that has been shown in FIG. 1.
FIG. 6 is a diagram showing an example of layout relationships for cameras.
FIG. 7 is a diagram showing an example of captured images from cameras.
FIG. 8 is a diagram showing an example of degrees of similarity that have been inferred.
FIG. 9 is a diagram showing an example of subject positions that have been updated.
FIG. 10 is a diagram showing an example of a relationship between camera numbers and camera selection buttons after the camera numbers have been allocated.
FIG. 11 is a flowchart showing a processing method for a controller according to a Second Embodiment.
FIG. 12 is a diagram showing an example of layout relationships for cameras.
FIG. 13 is a diagram showing an example of captured images from cameras.
FIG. 14 is a diagram showing one example of camera number groups.
FIG. 15 is a diagram showing an example of a relationship between camera numbers and camera selection buttons after the camera numbers have been allocated.
FIG. 16 is a flowchart showing control processing for a controller according to a Third Embodiment.
FIG. 17 is a diagram showing an example of a warning display.
FIG. 18 is a flowchart showing control processing for a controller according to a Fourth Embodiment
FIG. 19 is a diagram showing an example of layout relationships for cameras.
FIG. 20 is a diagram showing an example of captured images from cameras.
FIG. 21 is a diagram showing an example of degrees of similarity for subjects.
FIG. 22 is a diagram showing an example of determining positional relationships for cameras.

### DESCRIPTION OF THE EMBODIMENTS

Below, embodiments will be explained in detail with reference to the attached figures. Note that the following embodiments do not limit the recitations according to the claims. Although a plurality of features is disclosed in the embodiments, it is not necessarily the case that all of this plurality of features are indispensable elements of the present disclosure, and in addition, a plurality of these features may also be arbitrarily combined. Furthermore, in the attached figures, configurations that are the same or similar have the same reference numbers attached thereto, and redundant explanations will be omitted.

### <First Embodiment>

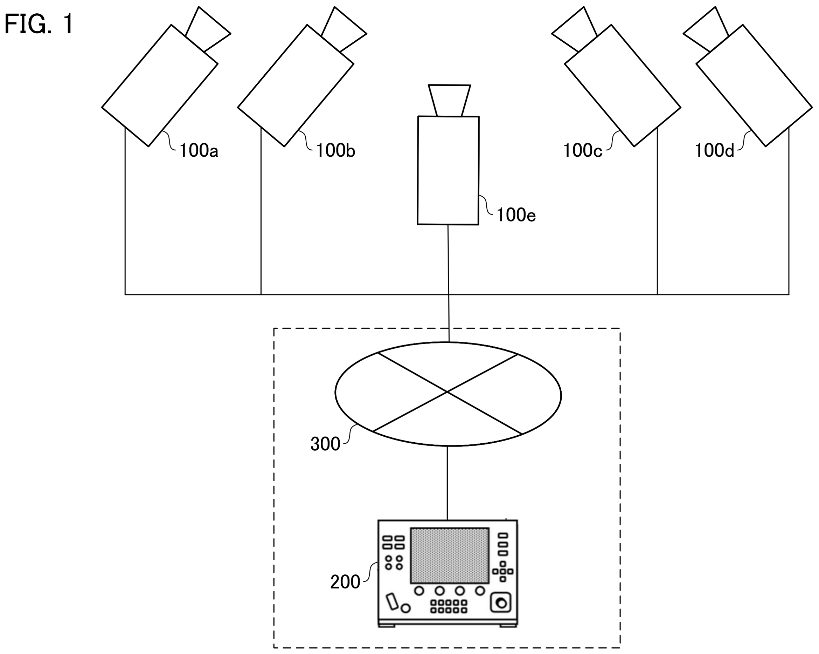

FIG. 1 is a diagram showing one example of a configuration of the system of the present embodiment. The present system has five cameras 100a to 100e, and a controller 200 for controlling the cameras 100a to 100e. The controller 200 is also referred to as a camera controller, and is a control apparatus according to the present embodiment. In addition, the cameras 100a to 100e and the controller 200 are connected via a network 300 in a state in which they are able to communicate with each other.

The controller 200 is able to perform control of the operations of the cameras 100a to 100e and acquisition of information by transmitting commands to the cameras 100a to 100e based on a camera control-use communications protocol.

It is made such that the camera 100a is a camera for use in image capturing of a subject, and the camera 100e is installed as a bird's-eye view camera for understanding the situation of the entire image capturing location. That is, the cameras 100a to 100e are image capturing apparatuses according to the present embodiment, and the camera 100e functions as a bird's-eye view image capturing apparatus that captures bird's-eye view images.

Note that although in the present embodiment, all five cameras, the cameras 100a to 100d for image capturing the subjects, and the camera 100e for use in bird's-eye view image capturing, are connected, the number and types of cameras are not limited as long as they are apparatuses that conform to the camera control-use communications protocol. For example, this may also be a peripheral device such as a platform and the like that does not have an image capturing function, this may also be a camera that has a PTZ (Panorama, Tilt, Zoom) mechanism, and this may also be a camera that only has a zoom function.

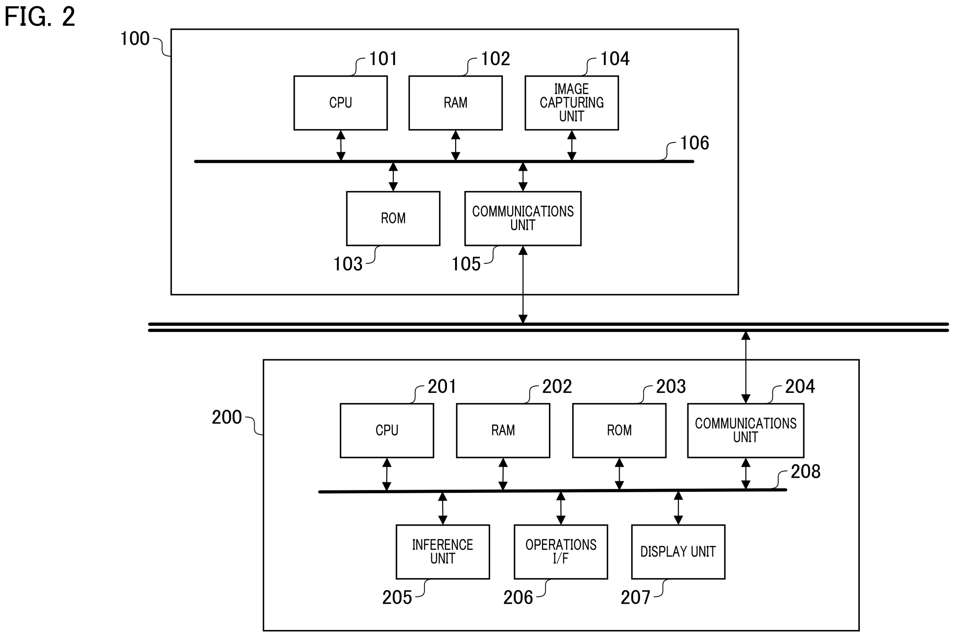

FIG. 2 is a diagram showing the principal configurations of the cameras 100a to 100e, and the controller 200 that configure the system that has been shown in FIG. 1. Note that the configurations of the cameras 100a to 100e are the same, and therefore, are shown in FIG. 2 as a camera 100. In addition, below as well, in cases in which the cameras 100a to 100e are not being differentiated, they will be simply referred to as the camera(s) 100.

### <Configuration of the camera 100>

The camera 100 of the present embodiment has a CPU 101, a RAM 102, a ROM 103, an image capturing unit 104, and a communications unit 105. In addition, each block that has been described is connected via an internal bus 106. Note that each block is electronically driven by direct current power that is obtained by rectifying externally provided AC power to a predetermined voltage, and power that is supplied from a built-in battery (not shown).

The CPU 101 is a system control unit that controls the entirety of the system of the camera 100. The CPU 101 performs control and arithmetic processing for each block by expanding and executing a control program that has been recorded on the ROM 103 on the RAM 102.

The RAM 102 serves as a working memory that temporarily stores control programs and data.

The ROM 103 is configured by a non-volatile storage apparatus such as a flash memory, an HDD (Hard Disk Drive), an SSD (Solid State Drive), an SD card, and the like. The ROM 103 is also used as a short-term storage area for each type of data in addition to being used a permanent storage area for an OS (Operating System), each type of program, and each type of data.

The image capturing unit 104 receives light that has been imaged via a lens on an image capturing element, converts this light that has been received into a charge, and captures moving images. For example, a CMOS (Complementary Metal Oxide Semiconductor) image sensor can be used as the image capturing element. In addition, a CCD (Charge Coupled Device) image sensor may also be used as the image capturing element.

The communications unit 105 is used in order to perform network communications with external devices. In the present embodiment, the communications unit 105 is used in communications with the controller 200.

### <Configuration of the controller 200>

Next, the controller 200 will be explained. The controller 200 of the present embodiment has a CPU 201, a RAM 202, a ROM 203, a communications unit 204, an inference unit 205, an operations I/F 206, and a display unit 207. Each of the blocks that have been explained are connected by an internal bus 208.

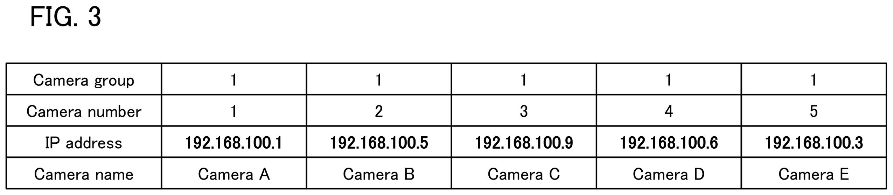

The CPU 201 is a system control unit that controls the entirety of the system of the controller 200. The CPU 201 performs control and arithmetic processing for each block, and executes the flowchart described below by expanding a program that has been stored on the ROM 203 onto the RAM 202 and executing the program. In addition, the CPU 201 manages the camera 100 to which it is connected, and handles the role of storing connected camera information such as a camera group, a camera number, the IP address for the camera 100, a camera name, and the like in the ROM 203. FIG. 3 shows an example of connected camera information.

The camera names A to D in FIG. 3 each correspond to the cameras 100a to 100d, and the camera name E corresponds to the camera 100e. In addition, the camera number for the camera name "camera A" is "1", the camera number for the camera name "camera B" is "2", and the camera number for the camera name "camera C" is "3". Furthermore, the camera number for the camera name "Camera D" is "4", and the camera number for the camera name "Camera E" is "5". In addition, the camera A to the camera E (the camera numbers 1 to 5) are all registered in the camera group "1".

The user is able to arbitrarily set the camera group, the camera number, and the camera name. In addition, the camera group and the camera number can be automatically set using the processing described below. In the present embodiment, the camera number is the number that is used when selecting the cameras A to E, and is the identification code for the cameras A to E (the cameras 100a to 100e). Note that the identification code is not limited to a number (numerical characters), and may also be alphabetical characters that are in alphabetical order, and the like. The camera group is the plurality of cameras 100 made into a group, and for example, it is possible to register as many cameras in one group as there are buttons that have been provided for camera selecting buttons 401 to be described below.

Returning to FIG. 2, the CPU 201 displays a menu screen on the display unit 207, and upon receiving an operation according to this menu screen via the operations I/F 206, the CPU 201 performs settings of the controller 200 itself and control of the camera 100 that has been connected thereto.

The RAM 202 serves as a working memory and temporarily stores control programs and data.

The ROM 203 is configured by a non-volatile storage apparatus such as a flash memory, an HDD, an SSD, an SD card, and the like. The ROM 203 is also used as a short-term storage area for each type of data in addition to being used as a permanent storage area for an OS, each type of program, and each type of data.

The communications unit 204 is used for performing network communications with external devices. In the present embodiment, the communications unit 204 is used in communications with the camera 100.

The inference unit 205 estimates the presence or absence of a predetermined object, a position of the object, and the like from a captured image that has been captured by the camera 100 and received by the previously described communications unit 204 and the like. The inference unit 205 is configured by an arithmetic apparatus that has been specialized for image processing and inference processing such as a so-called GPU (graphics processing unit), and the like. Although generally it is effective to use a GPU for inference processing, the same functions may also be realized by a re-configurable logic circuit such as an FPGA (Field-Programmable Gate Array). In addition, the processing of the inference unit 205 may also be handled by the CPU 201.

The operations I/F 206 is an interface (I/F) for receiving operations from the user regarding the controller 200. The operations I/F 206 includes operating elements such as a plurality of buttons, joysticks, and the like that have been disposed on the housing of the controller 200, and a GUI (graphical user interface) that has been displayed on the display unit 207. Upon the above-described operating members and GUI being operated, this operation information is input into the CPU 201. It is thereby possible to perform settings for the controller 200 itself, and control of the camera 100 that is connected to the controller 200. A detailed explanation will be given below.

The display unit 207 is configured by, for example, a liquid crystal panel and a backlight, and displays the captured images that have been acquired from the camera 100, settings screens, and the like. In the present embodiment, the display unit 207 displays the captured images that are captured by the camera 100, and the settings for the camera 100. Note that although in the present embodiment, an example is shown in which the controller 200 has the display unit 207, the present disclosure is not limited to this configuration. For example, the controller 200 and a display apparatus having the function of the display unit 207 may both be configured by separate housings.

### <Operation method for the operating members>

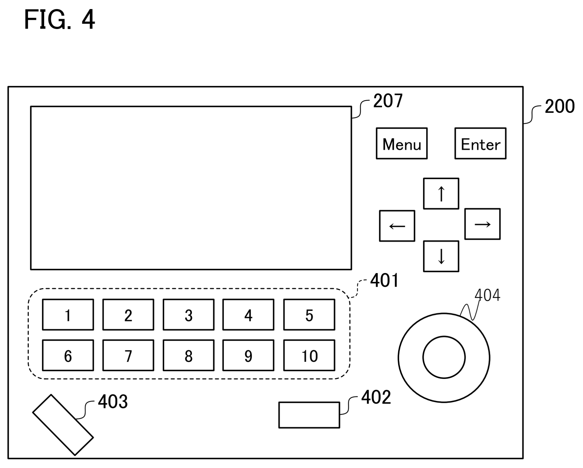

FIG. 4 is a diagram showing one example of a housing (exterior view) of the controller 200 according to the present embodiment. In addition to the display unit 207, the housing of the controller 200 is provided with camera selection buttons 401 that are included in the operations I/F 206, a camera group switching button 402, a zoom seesaw 403, and a joystick 404. Note that the configuration of the controller 200 in the present embodiment is not limited to this configuration, and for example, the camera selection buttons 401 may also be a GUI that is displayed on the display unit 207.

The camera selection buttons 401 are buttons that have been disposed on top of the housing of the controller 200, and the numbers 1 to 10 have been allocated to each button. For example, when the display unit 207 has been made a screen for switching the camera 100 that is the control target, if the camera button 401 for "1" is pressed down, this becomes a state in which the camera that is selected as the control target is the camera 100 that has been allocated "1" as its camera number. It becomes possible for the camera 100 with the camera number that has been selected as the control target to be operated from the zoom seesaw 403, the joystick 404, and the like.

The camera group switching button 402 is a button that has been disposed on top of the controller 200. The camera group switching button 402 is able to switch between a camera group for the cameras 1 to 10, and a camera group for the cameras 11 to 20 by pressing down a toggle. For example, if in a state in which the camera 100 with the camera number "1" has been selected as the control target, the camera group is changed to the second camera group indicated by "2" by operating the camera group switching button 402, this becomes a state in which the camera 100 for the camera number "11" is selected as the control target. Note that although in the present embodiment, the camera group switching button 402 was made to switch the camera groups by being toggled, the present disclosure is not limited thereto. For example, after the camera group button has been pushed down, this may also be made a GUI such that the camera group to which the switch is being performed is displayed on the display unit 207.

The zoom seesaw 403 is disposed on top of the housing of the controller 200. The zoom seesaw 403 is able to control the zoom of the control target camera 100 by being operated.

The joystick 403 is disposed on top of the housing of the controller 200. The joystick 403 is able to control the pan/tilt of the control target camera 100 by being operated in the vertical and horizontal directions, and is also able to control the pan/tilt of a peripheral device by being operated in the vertical and horizontal directions.

### <Operations of the present embodiment>

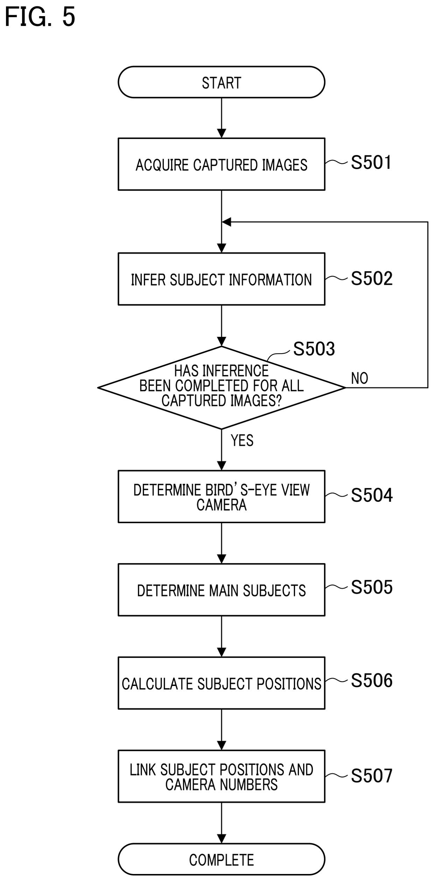

Next, the flowchart in FIG. 5 will be used to explain the operation of allocating camera numbers (a control method for the control apparatus) according to the positional relationships of subjects as an operation of the controller 200 having the above-described configuration. The present flowchart is realized by the CPU 201 reading out a program that has been stored on the ROM 203 and expanding this on the RAM 202, then executing control of each unit, and arithmetic processing. In addition, the CPU 210 acquires information (operation information) based on operations from the user via the operations I/F 206, and the flowchart of FIG. 5 is executed based on this operation information. Note that the processing that is shown in FIG. 5 is merely one example, and does not limit the order.

In addition, in the following explanation, an explanation is given assuming that five cameras 100, the cameras A to E, have already been registered in order as the camera numbers 1 to 5 for the controller 200. The cameras A to D are image capturing-use cameras for capturing images of subjects, and the camera E is made a camera that has been disposed as a bird's-eye view camera that captures images of a bird's-eye view perspective including the subjects and the like that are image captured by the camera A to D in order to enable understanding of the entire state of the image capturing location. Note that although in the present embodiment, the subjects are explained as articles such as people and the like, it is sufficient if the subject is an article that can be recognized as separate from the background.

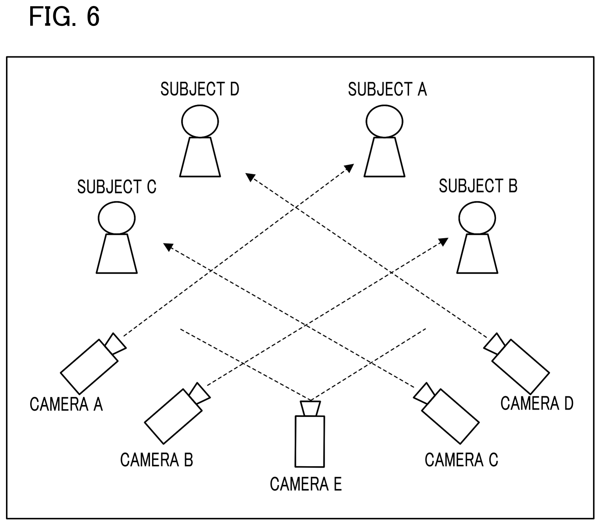

FIG. 6 shows an example of the positional relationships between each camera in the present embodiment. In the example of FIG. 6, the cameras are disposed in the order of the camera A, the camera B, the camera E, the camera C, and the camera D from the left when looking at the subject side from the camera side. In addition, each camera is disposed so as to capture images of one or more subjects from among four people serving as subjects of a subject A, a subject B, a subject C, and a subject D.

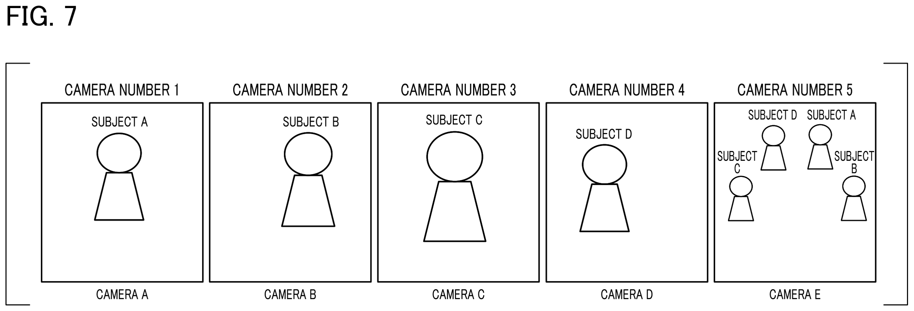

FIG. 7 shows one example of a captured image from each camera. Camera A has been disposed so as to be able to capture images of the subject A as a main subject (a principal subject), camera B has been disposed so as to be able to capture images of the subject B as a main subject, camera C has been disposed so as to be able to capture images of the subject C as a main subject, and camera D has been disposed so as to be able to capture images of the subject D as a main subject, while it is made such that camera E has been disposed such that all of the subjects are included in the angle of view thereof. That is, in the examples shown in FIG. 6. And FIG. 7, the camera positions and the subject positions intersect. Therefore, if the cameras are registered in the camera selection buttons 401 in the order in which the cameras 100 are lined up, the order will become different than the order in which the subjects are lined up.

Below, each step of the flowchart in FIG. 5 will be explained. In addition, the notation of the processes (steps) has been simplified by adding an S to the beginning of the notation of each process (step). First, during S501, the CPU 201 receives (acquires), via the communications unit 204, captured images (image data) from the cameras 100 that have been registered in the controller 200, and stores these on the RAM 202. That is, the CPU 201 functions as a captured image acquisition unit configured to acquire captured images from a plurality of image capturing apparatuses.

Note that although in the present embodiment, captured images are received via the communications unit 204, the present disclosure is not limited thereto. For example, a captured image input unit can be separately provided, and captured images may also be received by connection to an SDI (Serial Digital Interface), and an HDMI (registered trademark) (High-Definition Multimedia Interface).

Next, during S502, the CPU 201 reads out the captured images that were stored on the RAM 202 during S501, and inputs these into the inference unit 205. The inference unit 205 infers subject information such as a position of a subject in a captured image (as subject position), a size of a subject in a captured image (a subject size), and the like based on the captured images that have been input, and stores this information on the RAM 202. The inference unit 205 has a pre-trained model that has been created by machine learning such as deep learning and the like, and receives images that serve as input data, and outputs information such as a type of subject such as a person and the like, a subject size, and a subject position to serve as output data. In addition, in a case in which a plurality of images has been input, a degree of similarity for the subjects that are included in each of these images is also output.

Note that in the present embodiment, the subject position is explained as coordinates that show a centroid position of a subject in an image. The subject size is explained as a value (for example a pixel number) that shows a height and a width in an image of a box encircling a subject that has been detected. The degree of similarity for a subject is a value from 0 to 100, and an explanation is given in which the larger that this value is, the more similar the subjects in an image that has been input are.

Furthermore, the subject information is associated with the captured images for the amount of subjects and then stored in the RAM 202. For example, in FIG. 7, the captured image from the camera A includes only the subject A, and therefore, this image is saved after associating only the subject information for the subject A therewith. In contrast, the captured image from the camera E includes the subjects A, B, C, and D, and therefore, this captured image is stored after the four pieces of subject information for the subjects A, B, C, and D are associated therewith.

Returning to the explanation of FIG. 5, during S503, the CPU 201 determines whether or not the inference from S502 has been completed for all of the captured images that were stored on the RAM 202 during S501. If it has been determined that the inference has been completed (S503: Yes), the processing transitions to S504, and in a case in which it has been determined that the inference has not yet been completed (S503: No), the processing transitions to S502.

Next, during S504, the CPU 201 reads out the captured images that were stored during S501, and the subject information that was stored during S502 from the RAM 202 and determines that the captured image that has the greatest amount of subject information associated therewith is the captured image from the bird's-eye view camera for enabling understanding of the entire situation of the image capturing location. That is, the CPU 201 uses the captured image in which the greatest amount of subjects appear from among the captured images that have been acquired as the bird's-eye view image (reference image), and acquires the positional relationships by executing the processing for S505 and S506 that will be described below.

The CPU 201 stores the camera number that is associated with the captured image that was determined to be the captured image from the bird's-eye view camera on the RAM 202 as the bird's-eye view camera number. In the example of FIG. 7, the camera E, with which four pieces of subject information have been associated, is determined to be the bird's-eye view camera, and the camera number 5 is stored on the RAM 202 as the bird's-eye view camera.

Note that in a case in which there are a plurality of cameras 100 that have the same number of pieces of subject information, the camera for which the average subject size is the smallest may also be determined as the bird's-eye view camera. That is, the CPU 201 may also make the captured image from among the captured images that have been acquired for which the number of subjects is the largest and the average size of the subjects is the smallest the reference image, and acquire the positional relationships by executing the processing for S505 and S506 that will be described below by using this reference image.

In addition, although in the present embodiment, the captured images are received from the camera 100, and the determination of the bird's-eye view camera is performed based on the number of pieces of subject information ( the number of subjects) that has been inferred from these captured images, the present disclosure is not limited thereto. For example, the user may also set the bird's-eye view camera via the operations I/F 206, and the inference may also be performed based on image data in which the subjects have been image captured that is stored on the ROM 203 in advance. That is, the ROM 203 may function as a storage unit in which a reference image for use in acquiring the positional relationships has been stored in advance, and the CPU 201 may also acquire the positional relationships by executing the processing for S505 and S506 that will be described below using the captured images that have been acquired and the reference image that is stored on the storage unit.

Next, during S505, the CPU 201 reads out the subject information that was stored during S502 from the RAM 202 and determines the main subject for each camera 100 based on this subject information. The main subject refers to a principal subject from among the subjects that are image captured by a camera 100 as was explained above. That is, the CPU 201 functions as a principal subject determination unit configured to determine a principal subject for each captured image that has been acquired. The CPU 201 stores the subject information for the subject that has been determined to be the main subject on the RAM 202. During the determination of the main subject, in a case in which there is one piece of subject information, the subject for this piece of subject information is determined to be the main subject, and in a case in which there is a plurality of pieces of subject information, the subject for which the subject size is the largest is determined to be the main subject.

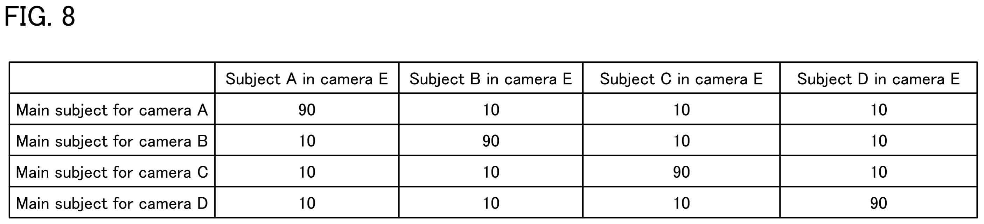

Next, during S506, the CPU 201 calculates the subject position. First, the CPU 201 reads out the captured images that were stored during S501 from the RAM 202, and inputs these into the inference unit 205. The inference unit 205 reads out the bird's-eye view camera number that was stored during S504 from the RAM 202, and infers the degrees of similarity for all of the subjects in the captured image that was associated with the camera number for the bird's-eye view camera with the main subjects in the other captured images. For example, in the example in FIG. 7, degrees of similarity are inferred for the subjects A to D in the captured image from the camera E with each of the subject A as the main subject for the camera A, the subject B as the main subject for the camera B, the subject C as the main subject for the camera C, and the subject D as the main subject for the camera D. FIG. 8 shows one example of degrees of similarity that have been inferred for the subjects.

In FIG. 8, the subject A in the camera E has a high degree of similarity with the main subject A for the camera A, and a low degree of similarity with the main subjects for the cameras B to D. The subject B in the camera E has a high degree of similarity the main subject B of the camera B, and a low degree of similarity with the main subjects of the cameras A, C, and D. The subject C in the camera E has a high degree of similarity with the main subject C of the camera C, and a low degree of similarity with the main subjects of the cameras A, B, and D. The subject D in the camera E has a high degree of similarity with the main subject D of the camera D, and a low degree of similarity with the main subjects of the cameras A to C.

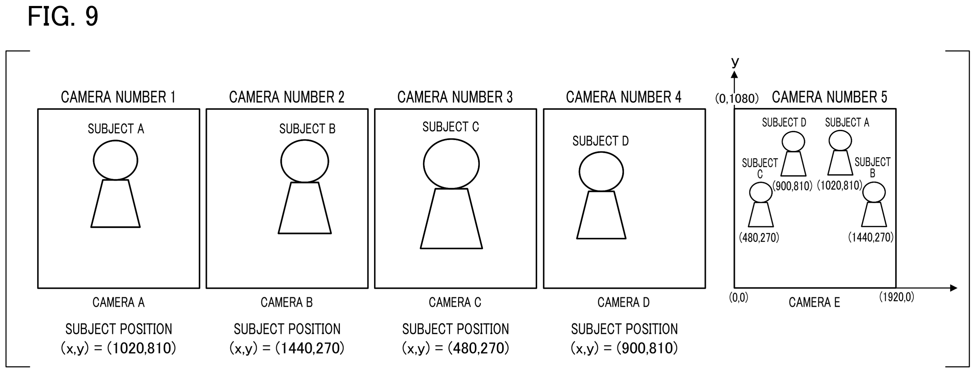

The inference unit 205 reads out the subject information from the RAM 202, and overwrites the subject positions from among the subject information for subjects for which it has been inferred that the degree of similarity is at or above, for example 50, which serves as a threshold value, with the subject positions in the captured image from the bird's-eye view camera, and stores these on the RAM 202. FIG. 9 shows one example of updated subject positions. The main subjects that are image captured by the cameras A to D are all updated to the subject positions for the coordinate system (x, y) of the camera E that has been determined to be the bird's-eye view camera.

By doing so, the positional relationships for the plurality of subjects A to D are calculated and acquired. That is, the CPU 201 functions as a subject position acquisition unit configured to acquire positional relationships for a plurality of subjects from captured images that have been acquired. In addition, the CPU 201 acquires the positional relationships by using the bird's-eye view image.

Next, during S507, the CPU 201 performs the linking of subject positions and camera numbers. The CPU 201 reads out the subject positions that were stored during S506 and the camera numbers associated therewith from the RAM 202. The CPU 201 re-allocates the camera numbers such that from among the subject positions that have been read out, the values that show the x coordinates are in ascending order, and stores this on the RAM 202. That is, the CPU 201 functions as an allocation unit that is configured to allocate identification codes that are conferred in order to select a plurality of image capturing apparatuses such that the order of the plurality of image capturing apparatuses becomes the same order as the order in which the plurality of subjects are lined up based on the captured images and the positional relationships for the subjects.

Finally, the CPU 201 changes the camera number of the camera that has been identified as the bird's-eye view camera during S504 to the final number of the camera group, and registers this.

As has been explained above, S501 functions as a captured image acquiring process, S506 functions as a subject position acquiring process, and S507 functions as an allocating process.

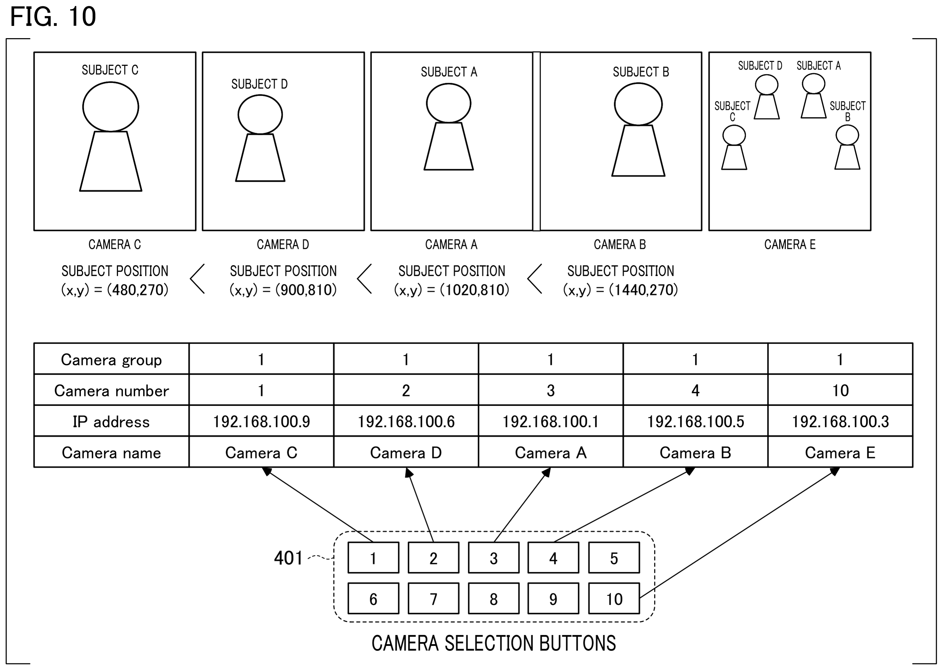

FIG. 10 shows one example of a case in which the camera numbers after re-allocation and the camera numbers after the application of the present embodiment have been assigned to the camera selection buttons 401 that were shown in FIG. 4. During S506, the subject positions were overwritten, and the order of the cameras thereby became camera C, camera D, camera A, and camera B in order from the camera for which the x coordinate of the subject position is the closest to the coordinate origin point. Therefore, as was shown in the table in the middle of FIG. 10, the camera C is allocated the camera number "1", the camera D is allocated the camera number "2", the camera A is allocated the camera number "3", and the camera B is allocated the camera number "4". In addition, the camera E is allocated the camera number "10", which is the final camera number of the camera group. Therefore, it is possible to switch between the cameras A to E by selecting a camera selection button 401. That is, the operations I/F 206 functions as a selection unit configured to select one of a plurality of image capturing apparatuses based on identification codes that have been allocated by an allocation unit.

According to the present embodiment, it is possible to allocate camera numbers to the cameras 100 that have been registered in the controller 200 in the order of the positions of the subjects that are being image captured by these cameras 100. It thereby becomes possible to select a camera without confirming each captured image in a case in which, for example, as is shown FIG. 6, the camera positions and the subject positions intersect, and in a case in which the order in which the cameras have been disposed does not match the actual order in which the subjects that have been image captured are lined up. Therefore, it is possible to make it easier to understand the camera that should be selected when operating the camera using the camera selection buttons 401 of the controller 200, which are buttons that have been arranged in advance. Therefore, it is possible to easily select a desired video image.

### <Second Embodiment>

Next, a control apparatus according to the Second Embodiment will be explained. Note that explanations with respect to configurations that are the same as the configurations in the First Embodiment will be omitted, and below, an explanation will be given that focuses on the portions that are different than the First Embodiment.

In the present embodiment, an explanation will be given of a function in which the cameras are grouped based on specific conditions, and the camera numbers are allocated based on these groups, and position information for the subjects.

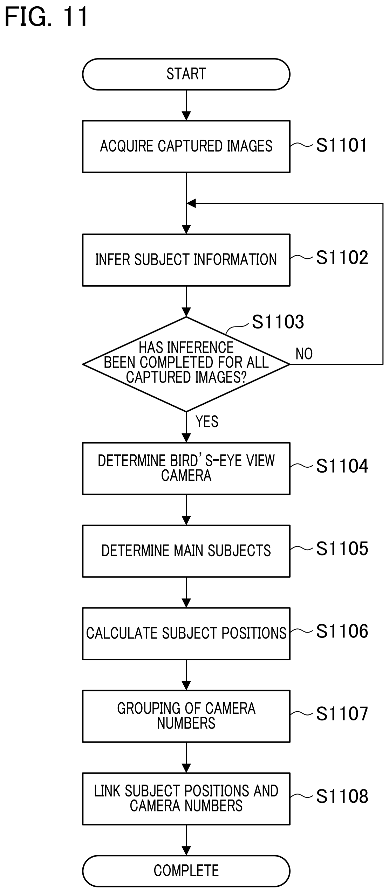

The configuration of the controller 200 according to the present embodiment is the same as the configuration in the First Embodiment, and therefore, an explanation thereof will be omitted. Below, an explanation will be given with respect to the points that are different from the First Embodiment using the flowchart for FIG. 11. The present flowchart is realized by the CPU 201 reading out a program that has been stored on the ROM 203 and expanding this on the RAM 202, and performing control of each unit and arithmetic processing. Note that the processing shown in FIG. 11 is merely one example, and does not limit the order.

In addition, in the present embodiment, an explanation will be given in which the five cameras 100 of the cameras A to E have already been registered in order for the camera numbers 1 to 5 of the controller 200. The cameras A to D are image capturing-use cameras for capturing images of subjects, and the camera E is made a camera that has been disposed as a bird's-eye view camera that captures images from a bird's-eye view perspective including the subjects and the like that are image captured by the camera A to D in order to enable understanding of the overall state of the image capturing location.

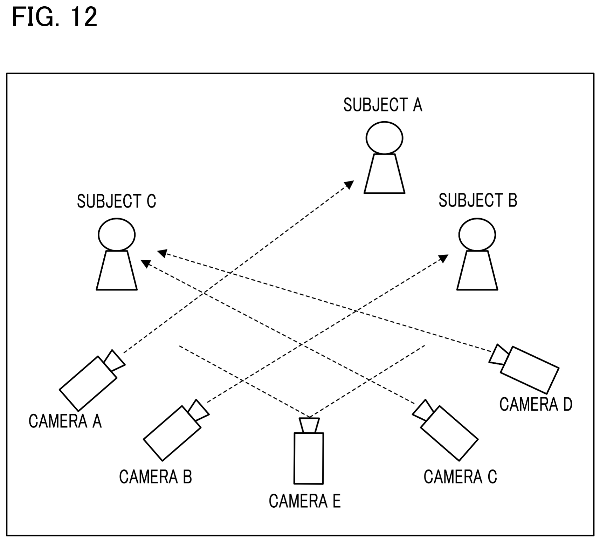

FIG. 12 shows an example of the layout relationships for each camera in the present embodiment. In the example of FIG. 12, the cameras are disposed in the order of the camera A, the camera B, the camera E, the camera C, and the camera D from the left when looking at the subject side from the camera side. In addition, each camera is disposed so as to capture images of one or more subjects from among three people serving as subjects of a subject A, a subject B, and a subject C.

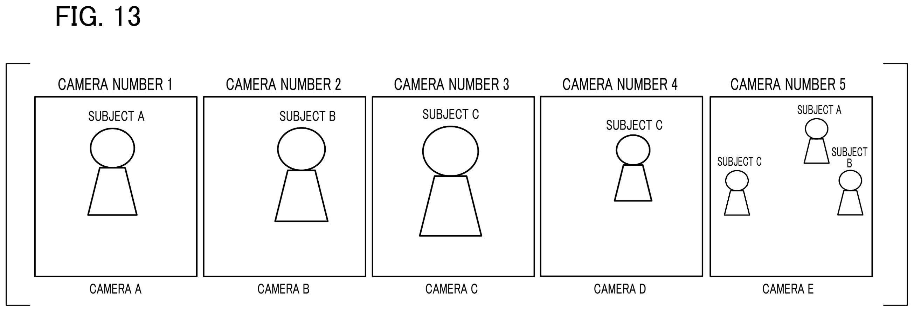

FIG. 13 shows one example of captured images from each camera. Camera A has been disposed so as to be able to capture images of the subject A as a main subject, camera B has been disposed so as to be able to capture images of the subject B as a main subject, and camera C has been disposed so as to be able to capture images of the subject C as a main subject. It is made such that camera E has been disposed such that all of the subjects are included in the angle of view thereof.

Below, each step of the flowchart in FIG. 11 will be explained. S1101 to S1106 perform processing that is the same as S501 to S506 of FIG. 5. During S1107, to which the processing transitions from S1106, the CPU 201 performs grouping of the camera numbers. The CPU 201 reads out the subject information for the main subjects in the cameras other than the camera that was determined as the bird's-eye view camera during S1104 from the RAM 202. The CPU 201 associates a camera 100 for which the subject position is the same as a camera 100 that is capturing images of the same subject based on the subject information that has been read out, and determines that these cameras are in the same camera number group. A camera number group refers to a group of cameras 100 that are capturing images of the same subject, and is different than the camera group that was shown in FIG. 3 and the like. That is, the CPU 201 functions as a classification unit that groups image capturing apparatus that have the same principal subject into the same group.

In addition, the CPU 201 determines that cameras 100 that have unique subject positions are each part of individual camera number groups, and stores these on the RAM 202. Note that although an example has been explained in the present embodiment in which cameras 100 with the same subject positions have been made cameras of the same camera number group, the present disclosure is not limited thereto. For example, the user may also set the cameras 100 that belong to a camera number group via the operations I/F 206.

Conversely, information that has been associated with specific cameras may be stored in advance on the ROM 203 as coordinated camera information, and the camera number groups may also be set by the CPU 201 reading out the coordinated camera information. The specific cameras include not just single cameras such as the cameras 100, but also include peripheral devices that operate in coordination with the cameras such as a camera platform, a slider, and the like. That is, the coordinated camera information becomes correspondence information showing a corresponding relationship with peripheral devices that have been attached to the image capturing apparatuses, and the CPU 201 functions as a correspondence information acquisition unit, and groups image capturing apparatuses and corresponding peripheral devices as being part of the same group based on the correspondence information that has been acquired.

In the example of FIG. 13, the camera C and the camera D, which capture images of the same subject C, are determined as belonging to the same camera number group, and the other cameras A, and B are both determined as belonging to different camera number groups.

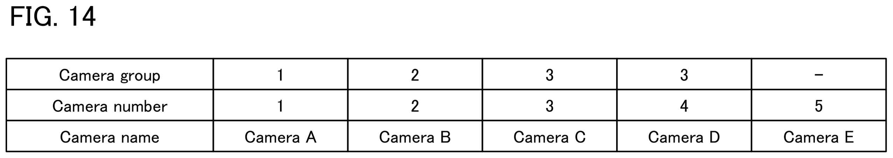

An example of the camera number groups in which the cameras A to E have been set after S1107 has been executed is shown in FIG. 14. As is shown in FIG. 14, the camera A belongs to the camera number group "1", the camera B belongs to the camera number group "2", and the cameras C, and D belong to the camera number group "3". The camera E is the bird' eye view camera, and is therefore excluded from the targets for grouping.

Next, during S1108, the CPU 201 performs linking of subject positions and camera numbers. The CPU 201 reads out the camera number groups that were stored during S11107 and the subject information from the RAM 202. The CPU 201 determines a degree of priority by allocating camera numbers to the cameras 100 that are registered in the same camera number groups based on the subject size for the main subjects. Note that in the present embodiment, an explanation is given in which the values for 1 to 10 are set in order from the camera for which the subject size of the main subject is the largest, and the degree of priority is set to be higher the smaller that this value is. For example, in the case of FIG. 14, the degree of priority for the camera C becomes "1", and the degree of priority for the camera D becomes "2". That is, the CPU 201 functions as a degree of priority setting unit configured to set degrees of priority according to a subject size in captured images that have been captured by image capturing apparatuses that have been grouped into the same group.

The CPU 201 re-allocates the camera numbers for the cameras 100 that have been determined to have the highest degrees of priority from among the cameras 100 that are registered in the same camera group such that the values that show the x coordinates for the subject positions are in ascending order. For example, in the case of FIG. 13, the cameras 100 that have been determined to have the highest degrees of priority are the cameras A, B, and C, and if it is made such that the values showing the x coordinates for the subject positions are in ascending order, the order becomes camera C, camera A, and camera B from FIG. 12.

In addition, the CPU 201 allocates camera numbers to the cameras 100 other than the cameras having the highest degrees of priority from among the cameras 100 that are registered in the same camera number groups based on the button positions of the camera selection buttons 401. For example, an explanation is given of a case in which the camera selection buttons 401 are arranged on the housing in m columns and n rows (m and n are integers of 2 or greater) (the example in FIG. 4 is 2 columns by 5 rows). In this case, the cameras 100 that belong to the same camera number groups are allocated camera numbers such that their respective camera selection buttons have the same horizontal positions, but the vertical positions of the buttons differ according to the degrees of priority.

The horizontal position of the camera selection button 401 is the position information showing which number from the left a button is from among the plurality of buttons that configure the camera selection buttons 401 that are disposed on the housing. That is, the horizontal position shows the row positions from among the m columns and n rows. The vertical position of the camera selecting button 401 is the position information showing which number from the top a button is from among the plurality of buttons that configure the camera selection buttons 401. That is, the vertical position shows the column position from among the m columns and n rows. Note that in the present embodiment, in a case in which a plurality of cameras belong to the same camera number group, the camera 100 with the highest degree of priority is registered on the top of the button array, and the cameras 100 are registered in decreasing order of the buttons as the degrees of priority decrease.

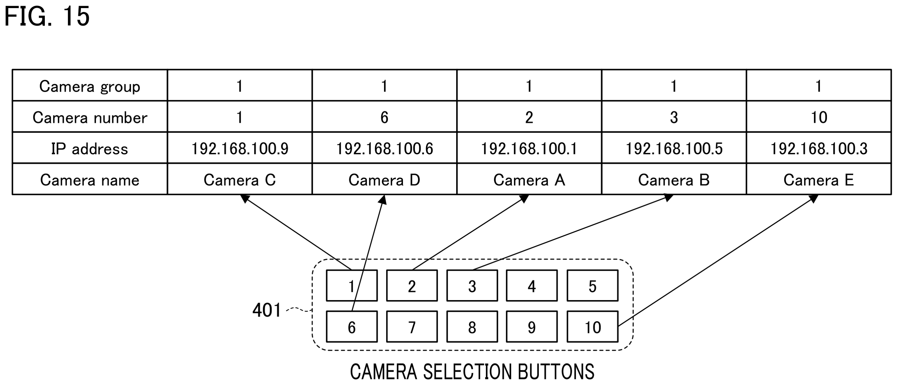

FIG. 15 shows one example of a case in which the camera numbers after application of the present embodiment have been allocated to the camera selecting buttons 401 that were shown in FIG. 4. As has been explained above, if the values that show the x coordinates for the subject positions of the cameras A, B, and C are made to be in ascending order, this will become the order of the camera C, the camera A, and the camera B. Therefore, the camera C becomes the camera number "1" and is allocated to the button of the camera selection buttons 401 that corresponds to "1", the camera A becomes the camera number "2" and is allocated to the button of the camera selection buttons 401 that corresponds to "2", and the camera B becomes the camera number "3" and is allocated to the button of the camera selection buttons 401 that corresponds to "3". The camera D belongs to the same camera number group as the camera C, and has a lower degree of priority than the camera number C, and therefore, is allocated to the button showing "6", which is a button that has the same horizontal position as the button showing the camera number "1" for camera C, with a vertical position that is below the button for "1". That is, the camera D becomes the camera number "6". This button showing "6" is in the same row but a different column (one below) than the button for "1".

Both camera A and camera B belong to camera number groups that only consist of one camera each, and therefore, no cameras 100 have been allocated to the buttons showing "7", and "8", which are below "2", and "3" on the camera selection buttons 401. By doing so, the CPU 201 allocates identification codes based on the positional relationships of the subjects, the results of grouping the subjects, and the degrees of priority for the subjects.

Note that although in the present embodiment, an example has been explained in which the camera numbers are assigned to the cameras other than the cameras having the highest degrees of priority based on the button positions of the camera selection buttons 401, the present disclosure is not limited thereto. For example, the camera numbers that are allocated may also be set by the user via the operations I/F 206, and information in which the allocated camera numbers have been assigned in order of degree of priority may be stored in advance in the ROM 203, and the CPU 201 may also set the camera numbers by reading out this information. In addition, in a case in which it is not possible to allocate camera numbers within the same camera group, the camera numbers may also be set for the next camera group.

Finally, the CPU 201 changes the camera number for the camera that was determined to be the bird's-eye view camera during S504 to the final number for the camera group, and records this. In FIG. 15, the camera E, which is the bird's-eye view camera, is registered as the camera number "10", which is the final number for the camera group in the control 200 of the present embodiment.

As has been explained above, according to the present embodiment, even in a case in which in addition to the First Embodiment, a plurality of cameras were image capturing the same subject, it is possible to make it easier to understand which camera should be selected when performing camera operations. Therefore, even in a case in which a plurality of cameras has been image capturing the same subject, it is possible to differentiate and switch between these, and it is possible to easily select a desired video image.

### <Third Embodiment>

Next, the control apparatus according to the Third Embodiment will be explained. Note that explanations of configurations that are the same as configurations in the First and Second Embodiments will be omitted, and below, an explanation will be given that focuses on the portions that are different than the First and Second Embodiments.

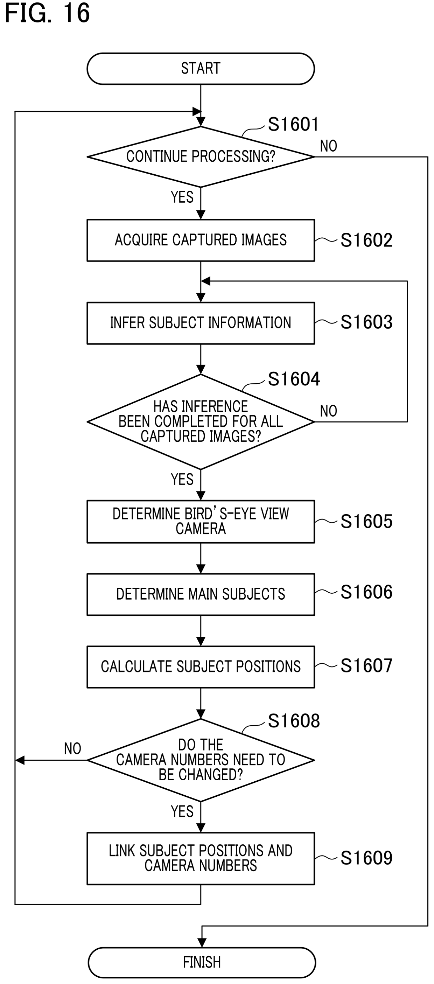

In the present embodiment, in addition to the operations of the First Embodiment, an explanation will be given of operations for a case in which the subjects have moved. The configuration of the controller 200 according to the present embodiment is the same as the configuration in the First Embodiment, and therefore, an explanation thereof will be omitted. Below, an explanation will be given with respect to the points that are different from the First Embodiment using the flowchart for FIG. 16. The present flowchart is realized by the CPU 201 reading out a program that has been stored on the ROM 203 and expanding this on the RAM 202, and performing control of each unit and arithmetic processing. Note that the processing shown in FIG. 16 is merely one example, and does not limit the order.

In addition, in the present embodiment, an explanation will be given in which the five cameras 100 of the cameras A to E have already been registered in order for the camera numbers 1 to 5 of the controller 200. The cameras A to D are image capturing-use cameras for capturing images of subjects, and the camera E is made a camera that has been disposed as a bird's-eye view camera that captures images from a bird's-eye view perspective including the subjects that are image captured by the camera A to D in order to enable understanding of the overall state of the image capturing location. It is made such that the layout of each of the cameras is the same as the layout in FIG. 6, and the image data for each camera is the same as the image data in FIG. 7.

Below, each step of flowchart for FIG. 16 will be explained. First, during S1601, the CPU 201 determines whether or not to continue the processing. The CPU 201 confirms whether or not a command indicating the completion of the present flowchart has been received via the communications unit 204 and the operations I/F 206, and if a command indicating completion has not been received, that is, if the processing will be continued (S1601: Yes), the processing transitions to S1602. In contrast, if a command indicating completion has been received (S1601: No), then the present flow chart is completed.

S1602 to S1607 each perform the same processing as S501 to S506 of FIG. 5. During S1608, to which the processing transitions from S1607, the CPU 201 determines whether or not it is necessary to change the camera numbers. The CPU 201 reads out the subject positions and the camera numbers that have been associated therewith that were stored during S1607 from the RAM 202. The CPU 201 re-allocates the camera numbers such that from among the subject positions that were read out, the values showing the x coordinates are in ascending order.

The CPU 201 determines whether or not the order of the camera numbers that have been read out from the RAM 202 and the order of the camera numbers that have been re-allocated are different. In a case in which it has been determined that the order of the camera numbers is the same (S1608: No), it is determined that the camera numbers do not need to be changed, and the processing thereby transitions to S1601. In contrast, in a case in which it has been determined that the order of the camera numbers is different (S1608: Yes), it is determined that it is necessary to change the camera numbers, and the processing thereby transitions to S1609. By determining that it is necessary to change the camera numbers, the CPU 201 determines that the subjects have moved. Therefore, the CPU 201 functions as a movement determination unit that is configured to determine movements of the subjects.

Note that although in the present embodiment, an example has been explained in which in a case in which it has been determined that the order of the camera numbers is different, the processing automatically transitions to S1609, the present disclosure is not limited thereto. For example, the CPU 201 may also display a warning on the display unit 207 that notifies the user to the effect that the camera order will be changed, and queries the user as to whether or not to perform changes to the order as is, and it may be determined if the processing should be transitioned to S1601, and if the processing should be transitioned to S1609 based on the response to this warning.

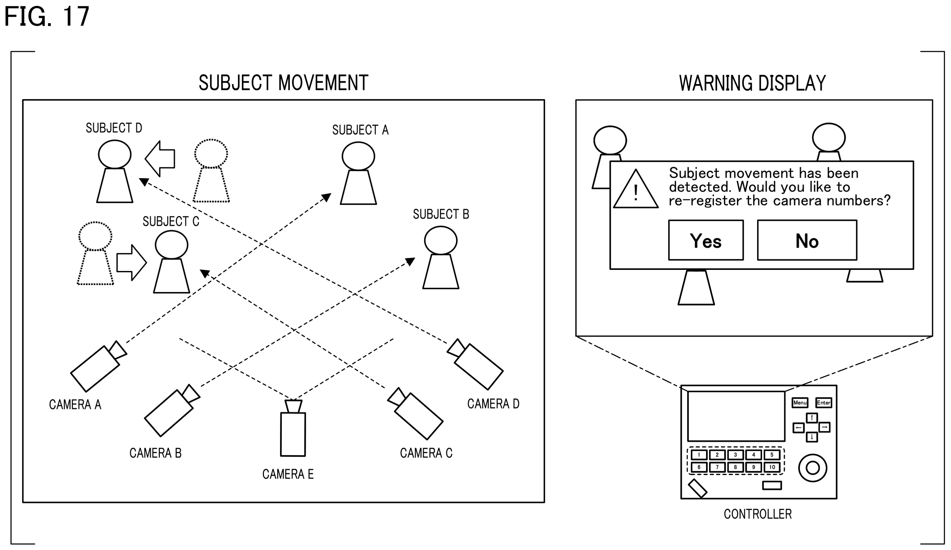

FIG. 17 shows one example of a warning that is displayed on the display unit 207 in a case in which the order of the subject positions has been changed by the subject C and the subject D having moved. In a case in which the user has selected "yes" via the operations I/F 206, the processing transitions to S1609. In contrast, in a case in which the user has selected "no" via the operations I/F 206, the processing proceeds to S1601 (conversely, the flowchart may also be completed). Note that the warning that was shown in FIG. 17 may also be positioned as a simple notification, and it is sufficient if the warning communicates to the user that the subjects have moved. That is, the display unit 207 functions as a notification unit that is configured to notify the user in a case in which the subjects have moved, and the operations I/F 206 functions as an operation information acquisition unit that is configured to acquire operation information based on operations from the user.

S1609, to which the processing transitions from S1608, performs the same processing as S507. That is, in a case in which it has been determined that the subjects have moved, the CPU 201 re-acquires the positional relationships for the subjects, and in a case in which it has been determined that the positional relationships have changed before and after the positional relationships have been re-acquired, the CPU 201 re-allocates the identification codes. In addition, in a case in which a display (notification) such as that in FIG. 17 has occurred, the identification codes are allocated based on operation information from after the notification by the notification unit.

As has been explained above, according to the present embodiment, even in a case in which there has been a change in the order of the camera numbers caused by the subjects having moved, it is possible to re-allocate the camera numbers to match the order after the change by detecting the change.

### <Fourth Embodiment>

Next, the control apparatus according to the Fourth Embodiment will be explained. Note that explanations of configurations that are the same as the configurations in the First to Third Embodiments will be omitted, and below, an explanation will be given that focuses on the portions that are different than the First to Third Embodiments.

In the present embodiment, an example will be explained of a function that uses an image capturing-use camera instead of a bird's-eye view camera in a case in which a camera that is equivalent to a bird's-eye view camera does not exist in the First Embodiment.

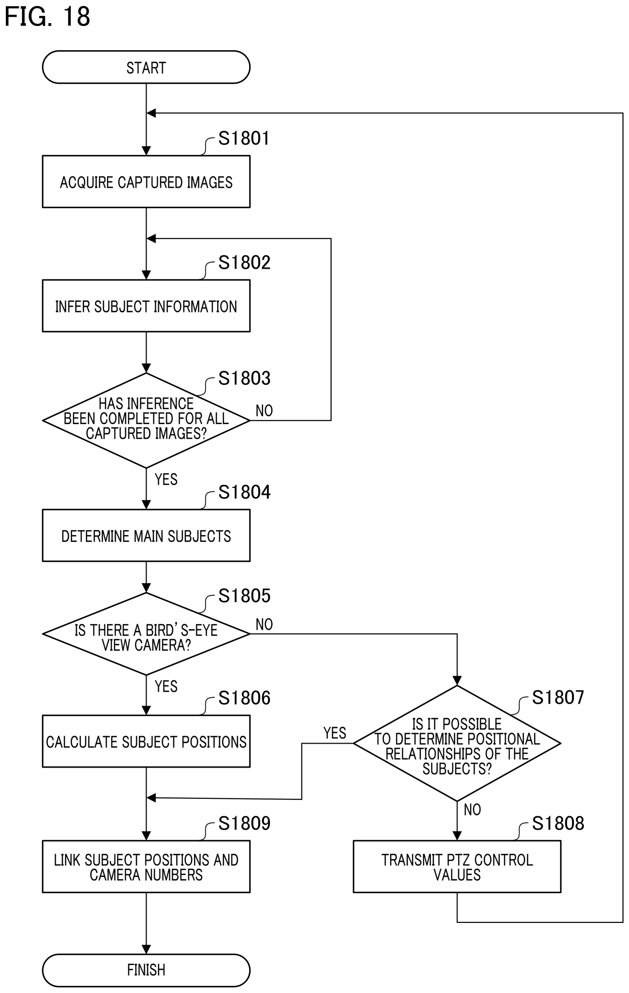

The configuration of the controller 200 according to the present embodiment is the same as the configuration in the First Embodiment, and therefore, an explanation thereof will be omitted. Below, an explanation will be given with respect to the points that are different from the First Embodiment using the flowchart for FIG. 18. The present flowchart is realized by the CPU 201 reading out a program that has been stored on the ROM 203 and expanding this on the RAM 202, and performing control of each unit, and arithmetic processing. Note that the processing shown in FIG. 18 is merely one example, and does not limit the procedures.

In addition, in the present embodiment, an explanation will be given in which the four cameras 100 of the cameras A to D have already been registered in order for the camera numbers 1 to 4 of the controller 200. The cameras A to D are image capturing-use cameras for capturing images of subjects. In addition, each camera is made a camera having a PTZ (panoramic tilt zoom) mechanism. Note that cameras having a PTZ mechanism are not limited to cameras that have a PTZ function for each individual camera, and this also includes cameras that have been attached to peripheral devices having one of a panoramic function, and a tilt function. That is, cameras having a PTZ mechanism are changeable image capturing apparatuses that are able to change the image capturing range.

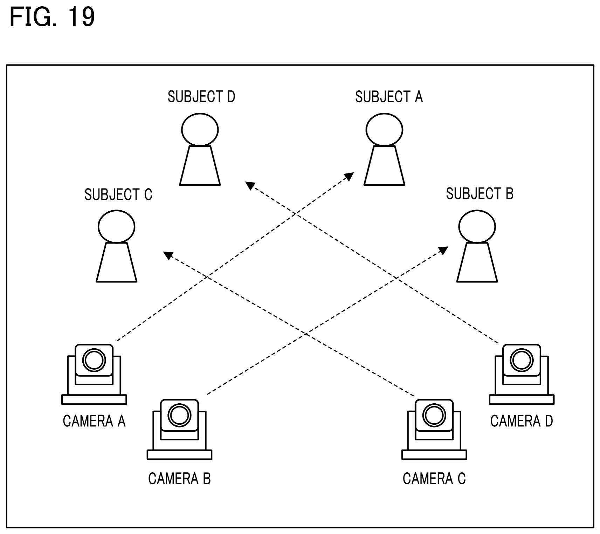

FIG. 19 shows the layout relationships for each camera. The cameras are disposed in the order of the camera A, the camera B, the camera C, and the camera D in order from the left when looking at the subject side from the camera side. In addition, each camera has been disposed so as to capture images of one or more subjects from among the three people serving as subjects of the subject A, the subject B, and the subject C.

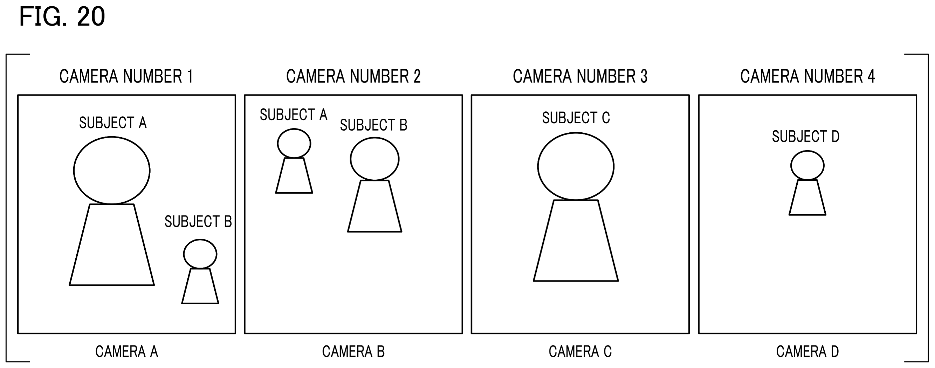

FIG. 20 shows one example of captured images from each camera. Camera A is disposed so as to be able to capture images of the subject A as the main subject, camera B is disposed so as to be able to capture images of the subject B as the main subject, the camera C is disposed so as to be able to capture images of the subject C as the main subject, and the camera D is disposed so as to be able to capture images of the subject D as the main subject. In addition, the subject B is image captured as a sub subject by the camera A, and the subject A is captured as a sub subject by the camera B. Sub subjects refer to subjects other than the main subject.

Below, each step of the flowchart for FIG. 18 will be explained. S1801 to S1803 of FIG. 18 each perform the same processing as S501 to S503 of FIG. 5. S1804 performs the same processing as S505 of FIG. 5.

During S1805, to which the processing transitions from S1804, the CPU 201 determines whether or not there is a bird's-eye view camera. The CPU 201 reads out the captured image information that has been stored during S1801, and the subject information that has been stored during S1802 from the RAM 202. The CPU 201 determines that the captured image having the greatest amount of subject information associated therewith is a captured image from a bird's-eye view camera for enabling understanding of the entire situation of the image capturing location, and inputs this into the inference unit 205. Note that although an explanation is given in the present embodiment in which captured images are received from the cameras, and the determination of the bird's-eye view camera is performed based on the number of pieces of subject information (the number of subjects) that have been inferred from these images, the present disclosure is not limited thereto. For example, the user may also set the bird's-eye view camera via the operations I/F 206, and the inference may also be performed based on image data that has been stored in the ROM 203 in advance. In addition, in a case in which there are a plurality of cameras for which the number of pieces of subject information is the same, it may also be determined that the camera for which the average subject size is the smallest is the bird's-eye view camera.

The inference unit 205 infers degrees of similarity for all of the subjects that are included in the captured image from the bird's-eye view camera that has been input from the CPU 201, with the main subjects for the captured images other than the captured images from the bird's-eye view camera, and stores these on the RAM 202. For example, in the example in FIG. 20, the number of pieces of subject information is the greatest in the camera A and the camera B, and the number of pieces of information is the same for these two, and therefore, it is determined that the camera B, for which the average size of the subjects is the smallest, is the bird's-eye view camera, and the captured images from the camera B are input into the inference unit 205. The inference unit 205 infers the degrees of similarity of the subjects A, and B in the captured image from the camera B with the subjects A, C, and D, which are the main subjects of the cameras A, C, and D.

The CPU 201 reads out the inference results from the RAM 202, and determines whether or not a subject for which the degree of similarity with the main subjects for all of the cameras is less than the threshold value of 50 exists in the captured image from the bird's-eye view camera. In a case in which the CPU 201 has determined that a subject does not exist for which the degree of similarity is less than the threshold value of 50, the processing transitions to S1806 (S1805: Yes). A subject for which the degree of similarity is less than 50 not existing means that all of the main subjects are included in the captured image from the camera that has been determined to be the bird's-eye view camera, and it is possible to understand the entire situation of the image capturing location in this case. Therefore, it becomes such that there is a bird's-eye view camera.

In contrast, in a case in which it has been determined that a subject exists for which the degree of similarity is less than 50, the processing transitions to S1807 (S1805: No). The existence of a main subject for which the degree of similarity is less than 50 means that all of the main subjects are not included in the captured image from the camera that has been determined to be the bird's-eye view camera (only a portion of the main subjects are included), and the entire situation of the image capturing location cannot be understood. Therefore, it is eventually determined that the camera that has been determined to be the bird's-eye view camera from the average size of the subjects is not a bird's-eye view camera.

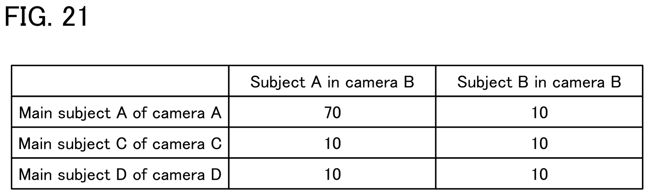

FIG. 21 shows one example of degrees of similarity for the subjects A and B in the captured image from the camera A with the main subjects for each camera. In FIG. 21, although the degree of similarity for the main subject A of the camera A and the subject A in the camera B is greater than or equal to the threshold value (70), the degrees of similarity for the main subject C of the camera C, and the main subject D of the camera D with the subjects A, and B in the camera B are less than the threshold value (10). Therefore, it is determined that subjects for which the degrees of similarity are less than the threshold value of 50 exist, and the processing transitions to S1807.

Returning to the explanation of FIG. 18, S1806 performs the same processing as S506 of FIG. 5. During S1807, the CPU 201 determines whether or not it is possible to determine the positional relationships for the subjects. The CPU 201 reads out the captured images there were stored during S1801, the subject information that was stored during S1802, and the main subject information that was stored during S1804 from the RAM 202. The CPU 201 inputs, into the inference unit 205, the captured image from the camera 100 having the lowest camera number (below, the input image), from among the cameras 100 to which the current camera numbers have been allocated. The inference unit 205 infers the degrees of similarity for the subjects that are not the main subject of the input image with the main subjects for the other cameras, and stores these on the RAM 202.

The CPU 201 reads out the degrees of similarity that have been inferred from the RAM 202, and determines whether or not a main subject exists for which the degree of similarity is equal to or greater than the threshold value of 50 in the captured images from the other cameras. In a case in which it has been determined that a main subject exists for which the degree of similarity is greater than or equal to the threshold value of 50, the CPU 201 determines the positional relationships for the subjects in the input image that has been input into the inference unit 205 based on the subject position information. Specifically, whether or not a subject (a subject for a captured image from another camera) for which the degree of similarity is greater than or equal to the threshold value appears in the input image more to the right than the main subject, and if a subject (a subject for a captured image from another camera) for which the degree of similarity is greater than or equal to the threshold value appears in the input image more to the left than the main subject based on the sizes of the x coordinates of the subject positions.

In a case in which the determination of the positional relationships is completed, and in a case in which it has been determined that a main subject for which the degree of similarity is greater than or equal to the threshold value of 50 does not exist, the CPU 201 increases the camera number by one, and performs S 1807 with the captured image for the camera 100 with the camera number that has been increased by one as a new input image. In addition, S1807 is repeated until the determinations are completed for all of the captured images.

Upon completing the determination for all of the captured images, the CPU 201 determines the positional relationships of the cameras 100 bases on the positional relationships in the captured images that have been determined. For example, in a case in which, in a captured image of a specific camera, a subject that appears more to the right than the main subject has been image captured by a different camera as the main subject, it is determined that this other camera captures images more toward the right side than this specific camera.

Upon determining that it has become possible to understand the positional relationships for all of the cameras that have been registered, the CPU 201 stores the positional relationships for each of the cameras 100 on the RAM 202, and the processing transitions to S1809. That is, it is made such that it was possible to determine the positional relationships for the subjects and the processing is thereby transitioned to S1809. In contrast, upon determining that it has not been possible to understand the positional relationships for all of the cameras that have been registered, the processing transitions to S1808. That is, it is made such that it was not possible to determine the positional relationships for the subjects and the processing is thereby transitioned to S1808.

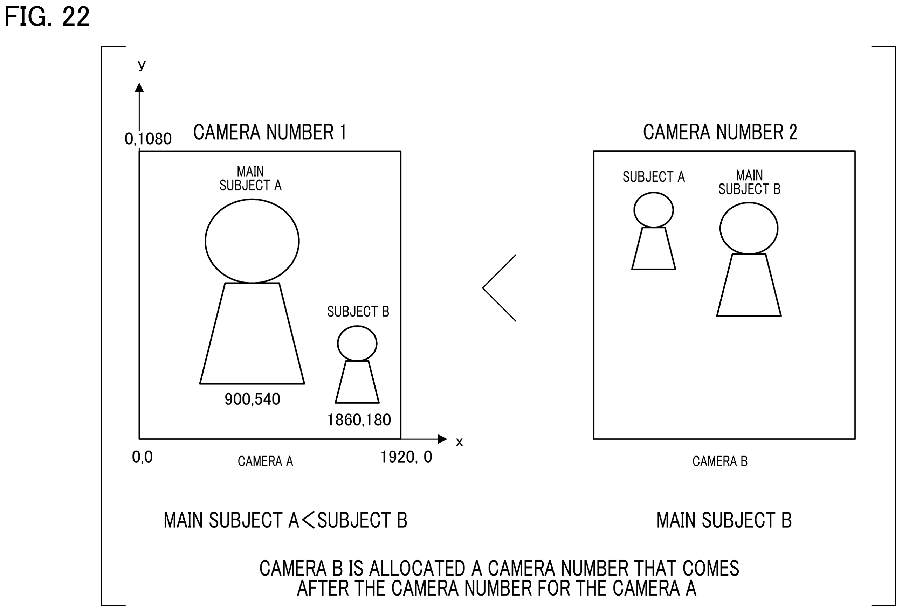

FIG. 22 shows on example of a positional relationship of the camera A and the camera B. In the captured image from the camera A, the main subject A appears more to the right than the subject B. That is, if the captured image from the camera A is made the input image, the CPU 201 determines that a main subject B for which the degree of similarity is greater than or equal to the threshold value 50 exists in the captured image from the camera B. In addition, it is determined that the subject B appears more to the right than the main subject A in the input image based on the sizes of the x coordinates for the subject positions. Therefore, it is determined that the camera B is more on the right side than the camera A.

During S1808, the CPU 201 reads out the control values for the PTZ that were stored in advance in the ROM 203, makes the communications unit transmit a control command to the cameras 100 based on these control values, and transitions the processing to S1801. Specifically, it is made such that the camera is able to capture images of a wider range by transmitting a control value that performs zooming out, and it is made such that it is possible to change the angle of view by transmitting a control value so as to move the pan and tilt to positions that are different than the current positions. That is, the communications unit 204 functions as a transmission unit configured to transmit control commands.

In addition, S1801 to S1805, and S1807 are executed again, and if it is possible to determine the positional relationships for the subjects, the processing transitions to S1809. In contrast, in a case in which even if the control values are changed, the processing is transitioned to S1808, the control values are further changed, and the processing from S1801 onward is thereby executed. That is, in a case in which the CPU 201 cannot acquire the positional relationships for the subjects, the transmission unit transmits control commands until it is possible to acquire the positional relationships for the subjects.

Note that although in the present embodiment, the control values for the PTZ are stored in the ROM 203 in advance, the present disclosure is not limited thereto. For example, values that have been input by the user via the operations I/F 206 may also be used as the PTZ control values, and the CPU 201 may also calculate the control values based on the captured images that were stored during S1801. In addition, the control values for the PTZ do not need to be transmitted for all of zooming out, panning, and tilting, and just one of these control values may also be transmitted. In addition, the bird's-eye view camera may also be detected, and once the linking of the subject positions with the camera numbers has been completed, the PTZ control values (the image capturing range for the camera) may also be returned to the initial values (the values from before the execution of the flowchart in FIG. 18).

In a case in which the processing has been transitioned to S1809 from S1806, the same operations as the operations for S507 are performed. In a case in which the processing has been transitioned to S1809 from S1807, the CPU 201 reads out the positional relationships for each camera that were stored during S1807 from the RAM 202, and the camera numbers are re-allocated in order from 1 based on these positional relationships.

As has been described above, according to the present embodiment, even in a case in which a camera that is equivalent to a bird's-eye view camera has not been prepared in advance, it is possible to make an already known camera function as a bird's-eye view camera, and thereby link the subject positions with the camera numbers.

### <Other Embodiments>

Although above, a detailed explanation of the present disclosure has been given based on favorable embodiments thereof, the present disclosure is not limited to these specific embodiments, and various modes of a range that does not depart from the gist of this disclosure are also included therein. In addition, a portion of the above-described embodiments may also be suitably combined.

For example, it may also be made such that allocation necessity information showing whether or not it is necessary to allocate an identification code is set in advance in an allocation setting unit such as the ROM 203, and the like, and the CPU 201 performs allocation of the identification codes shown in FIG. 5 and the like in a case in which the allocation necessity information shows that the allocation of identification codes is necessary.

In addition, the present disclosure also includes cases in which a software program that realizes the functions of the above-described embodiments is supplied to a system or an apparatus having a computer that is able to execute the program directly from a storage medium, and using a wired/wireless connected, and this program is executed. Therefore, the program code itself that is supplied to and installed on a computer in order to realize the function processing of the present disclosure on this computer also realizes the present disclosure. That is, the computer program itself for realizing the function processing of the present disclosure is also included in the present disclosure.

In this case, the format of the program, such as an object code, a program that is executed by an interpreter, script data that is supplied to an OS, and the like, does not matter as long as this has the functions of the program.

As the recording medium for supplying the program, for example, a magnetic recording medium such as a hard disk, a magnetic tape, and the like, an optical/magnetooptical storage medium, a non-volatile semiconductor memory, and the like may be used. In addition, as the method of supplying the program, a method is assumed such as recording the computer program that forms the present disclosure on a server on a computer network, and a client computer having a connection executing the program by downloading the computer program.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but will be understood that the present disclosure is not limited to these embodiments and encompasses all modifications, variants, alternatives and equivalents falling within the scope of the appended claims.

## Claims

1. A control apparatus (200) for controlling a plurality of image capturing apparatuses (100), the control apparatus comprising:
captured image acquisition means (201) for acquiring captured images from the plurality of image capturing apparatuses;
subject position acquisition means (201) for acquiring positional relationships for a plurality of subjects from the captured images acquired by the captured image acquisition means;
allocation means (201) for allocating identification codes that are conferred in order to select the plurality of image capturing apparatuses such that an order of the plurality of image capturing apparatuses becomes the same order as the order in which the plurality of subjects are lined up based on the positional relationships acquired by the subject position acquisition means and the captured images; and
selection means (206) for selecting one of the plurality of image capturing apparatuses based on the identification codes allocated by the allocation means.

2. The control apparatus according to claim 1,
wherein the plurality of image capturing apparatuses (100) includes a bird's-eye view image capturing apparatus (100e) configured to capture a bird's-eye view image, and
wherein the subject position acquisition means is configured to acquire the positional relationships by using the bird's-eye view image captured by the bird's-eye view image capturing apparatus, and the captured images other than the bird's-eye view image.

3. The control apparatus according to claim 1 or 2, further comprising:
storage means (203) configured to store reference images in advance for use in the acquiring the positional relationships,
wherein the subject position acquisition means is configured to acquire the positional relationships by using the reference images and the captured images acquired by the captured image acquisition means.

4. The control apparatus according to claim 1 or 2,
wherein the subject position acquisition means is configured to make a captured image from among the captured images acquired by the captured image acquisition means, the captured image having the greatest number of subjects, a reference image, and acquire the positional relationships by using the reference image and the captured images other than the reference image.

5. The control apparatus according to claim 1 or 2,
wherein the subject position acquisition means is configured to make a captured image from among the captured images acquired by the captured image acquisition means, the captured image having the greatest number of subjects and the smallest average size for the subjects, a reference image, and acquire the positional relationships by using the reference image and the captured images other than the reference image.

6. The control apparatus according to any one of claims 1 to 5 further comprising:
principal subject determination means (201) for determining principal subjects for the captured images acquired by the captured image acquisition means;
classification means (201) for grouping the image capturing apparatuses for which the principal subjects determined by the principal subject determination means are the same in the same groups; and
priority setting means (201) for setting degrees of priority according to sizes of subjects in the captured images captured by the image capturing apparatuses that have been grouped into the same groups by the classification means, and
wherein the allocation means is configured to allocate the identification codes based on the positional relationships acquired by the subject position acquisition means, results of the grouping by the classification means, and the degrees of priority set by the priority setting means.

7. The control apparatus according to claim 6 further comprising:
correspondence information acquisition means for acquiring correspondence information representing a corresponding relationship between the image capturing apparatuses and peripheral devices that have been attached to the image capturing apparatuses,
wherein the classification means is configured to group the image capturing apparatuses and the corresponding peripheral devices into the same groups based on the correspondence information.

8. The control apparatus according to any one of claims 1 to 7 further comprising:
movement determination means for determining whether the subjects have moved,
wherein the subject position acquisition means is configured to re-acquire the positional relationships in a case in which the movement determination means determines that the subjects have moved, and the allocation means is configured to re-allocate the identification codes in a case in which the movement determination means determines that the positional relationships have changed from before and after the positional relationships were re-acquired.

9. The control apparatus according to claim 8 further comprising:
notification means (207) for notifying a user in a case in which the movement determination means determines that the subjects have moved; and
operation information acquisition means (206) acquiring operation information based on operations of the user,
wherein the allocation means is configured to allocate the identification codes based on the operation information acquired by the operation information acquisition means after the notification means notified.

10. The control apparatus according to any one of claims 1 to 9,
wherein a changeable image capturing apparatus capable of changing an image capturing range is included in the plurality of image capturing apparatuses,
wherein the control apparatus further includes transmission means (204) for transmitting, to the changeable image capturing apparatus, control commands for changing the image capturing range, and
wherein the transmission means is configured to transmit the control commands until the subject position acquisition means becomes capable of acquire the positional relationships in a case in which the subject position acquisition means is not able to acquire the positional relationships.

11. The control apparatus according to any one of claims 1 to 10 further comprising:
allocation setting means (203) for setting in advance allocation necessity information representing whether or not it is necessary to allocate the identification codes; and
wherein the allocation means is configured to perform allocation of the identification codes in a case in which the allocation necessity information set by the allocation setting means indicates that allocation of the identification codes is necessary.

12. A method for controlling a plurality of image capturing apparatuses (100), the method comprising:
a captured image acquisition step of acquiring captured images from the plurality of image capturing apparatuses;
a subject position acquisition step of acquiring positional relationships for a plurality of subjects from the captured images acquired in the captured image acquisition step; and
an allocation step of allocating identification codes that are conferred in order to select the plurality of image capturing apparatuses such that an order of the plurality of image capturing apparatuses becomes the same order as the order in which the plurality of subjects are lined up based on the positional relationships acquired in the subject position acquisition step and the captured images.

13. A non-transitory storage medium storing a program of a control apparatus (200) that controls a plurality of image capturing apparatuses (100), causing a computer to perform each step of a method for controlling the plurality of image capturing apparatuses (100), the method comprising:
a captured image acquisition step of acquiring captured images from the plurality of image capturing apparatuses;
a subject position acquisition step of acquiring positional relationships for a plurality of subjects from the captured images acquired in the captured image acquisition step; and
an allocation step of allocating identification codes that are conferred in order to select the plurality of image capturing apparatuses such that an order of the plurality of image capturing apparatuses becomes the same order as the order in which the plurality of subjects are lined up based on the positional relationships acquired in the subject position acquisition step and the captured images.
